# EUROPEAN PATENT SPECIFICATION

(11) **EP 4 094 628 B1**
(45) Date of publication and mention of the grant of the patent: **21.06.2023**
(21) Application number: 21214062.8
(22) Date of filing: 13.12.2021
(51) Int. Cl.: A47C 1/032

(54) **CHAIR CHASSIS AND CHAIR**
STUHLGESTELL UND STUHL
CHÂSSIS DE CHAISE ET CHAISE

(30) Priority: 27.05.2021 CN 202110582976
(43) Date of publication of application: 30.11.2022
(73) Proprietor: Comfort Office Furniture Co., Ltd Guangdong, Nansha District Guangzhou City Guangdong 510000 (CN)
(72) Inventor: HU, Guoqiang, Guangzhou City, Guangdong 510000 (CN); ZHANG, Min, Guangzhou City, Guangdong 510000 (CN)
(74) Representative: Ipside

(56) References cited:
- US-A- 5 971 481

## Description

### Technical Field

Embodiments of the present disclosure relate to the technical field of chair backrest adjustment, and in particular, relate to a chair chassis and a chair.

### Background of the Invention

Chairs are necessities in people's daily life and working. For accommodation of different needs and different habits of different users, in a conventional chair, supports by the backrest against a human body at different angles are achieved by adjusting and fixing an inclination angle of pitching and reclination of the backrest. However, due to structural limitation of the backrest adjustment mechanism, it is only possible that the backrests of most of the chairs are adjusted to a desired angle and then fixed, and fail to move with movement of the back of the human body. Therefore, comfort of the chair is poor. An example of known chair is disclosed in US5971481 A.

### Summary of the Invention

In view of the above problem, embodiments of the present disclosure provide a chair chassis and a chair, which achieve reclination memory adjustment of a backrest of the chair.

According to one aspect of the embodiments of the present disclosure, a chair chassis is provided. The chair chassis is configured to adjust a backrest of a chair. The chair chassis includes: a base, provided with an accommodation chamber; a backrest support, wherein one end of the backrest support is configured to be connected to the backrest of the chair, and the other end of the backrest support is rotatably connected to the base, and the backrest support is elastically restorable; a memory stopper, disposed on the backrest support, wherein the memory stopper is provided with a first arc surface facing the base; a locking slider, slidably disposed in the accommodation chamber of the base, wherein the locking slider is provided with a second arc surface disposed opposite to the first arc surface, wherein the second arc surface is configured to support and limit recline rotation of the first arc surface such that reclination of the backrest support is limited, and a side of the locking slider is provided with a first rack; a first elastic member, connected between the locking slider and the base, and configured to supply a restoration elastic force for sliding towards the memory stopper to the locking slider; and an elastic slider, slidably disposed in the accommodation chamber of the base, wherein one end of the elastic slider is provided with a second rack, wherein the second rack is meshable with the first rack, and configured to limit and lock the locking slider.

In an optional embodiment, the chair chassis further includes: a second elastic member, connected between the elastic slider and the base, and configured to supply an elastic force for sliding away from the locking slider to the elastic slider; an active slider, slidably disposed in the accommodation chamber of the base, wherein a side of the active slider is abuttable against one end of the elastic slider to limit sliding of the elastic slider; and a third elastic member, connected between the active slider and the base, and configured to supply an elastic force for sliding towards the elastic slider to the active slider.

In an optional embodiment, the active slider is provided with a first inclined surface, and the elastic slider is provided with a second inclined surface, wherein in the case that the active slider slides towards the elastic slider under action of the third elastic member, the first inclined surface and the second inclined surface slide relative to each other such that the elastic slider slides towards the locking slider and the second rack is meshed with the first rack.

In an optional embodiment, a first pull cord is connected to the active slider; wherein in the case that the first pull cord is pulled, the active slider slides such that the elastic slider is separated from the locking slider.

In an optional embodiment, two sides of the backrest support are each provided with a connection arm rotatably connected to the base, and the chair chassis further includes: a pitch block, disposed on an inner side of the connection arm; a restraining slider, slidably disposed in the accommodation chamber of the base, wherein the restraining slider is mated with the pitch block, and configured to limit pitch rotation of the backrest support.

In an optional embodiment, the pitch block is provided with a restraining surface, wherein the restraining surface is configured to be abutted against the restraining slider to limit pitch rotation of the backrest support.

In an optional embodiment, the chair chassis further includes: a fourth elastic member, disposed on the base, wherein one end of the fourth elastic member is connected to the restraining slider, and configured to drive the restraining slider to slide to be separated from the pitch block; and a fifth elastic member, connected between the other end of the fourth elastic member and the base, and configured to supply an elastic force for sliding towards the pitch block to the restraining slider.

In an optional embodiment, a second pull cord is connected to the fourth elastic member, wherein in the case that the second pull cord is pulled, the restraining slider slides such that the restraining slider is separated from the pitch block.

In an optional embodiment, a top of the locking slider is covered with a cover plate, wherein the cover plate is fixedly connected to threads of the base.

In an optional embodiment, the chair chassis further includes an elastic strip, wherein one end of the elastic strip is clamped onto the base, and the other end of the elastic strip is clamped onto the backrest support, wherein the base is provided with a support structure configured to support the elastic strip.

In an optional embodiment, the backrest support rotates relative to the base about the rotation shaft to adjust reclination and pitching of the backrest.

According to another aspect of the embodiments of the present disclosure, a chair is provided. The chair includes the chair chassis.

In an optional embodiment, the chair further includes a cushion support, wherein the cushion support is disposed on the chair chassis, and the cushion support is provided with a handle, wherein the handle is configured to control and adjust the chair chassis.

The backrest support rotates relative to the base about a rotation shaft to adjust reclination and pitching of the backrest. In the case that the second rack on the elastic slider is meshed with the first rack on the locking slider, the locking slider is limited and locked, and in this case, the memory stopper is capable of undergoing pitch rotation. In the case that the memory stopper undergoes recline rotation about the rotation shaft, reaches the first arc surface and is abutted against the second arc surface, since the locking slider is limited and locked, the memory stopper fails to continue the recline rotation. In this way, the reclination memory limitation of the backrest support is achieved. In addition, by meshing-based locking and disengagement-based unlocking between the second rack on the elastic slider and the first rack on the locking slider, the locking slider slides to any position and is then locked. In this way, an angle of the reclination memory limitation may be unlimitedly adjusted, and a user may adjust any reclination angle for memory and locking according to actual needs, thereby improving comfort of the user. During use, since the backrest support is elastically restorable, within the angle for memory limitation of the backrest support, the backrest of the chair may be automatically abutted against the back of a human body and rotates for adjustment accordingly with movement of the back of the human body, such that the backrest of the chair is tightly attached to the back of the human body and provides a sufficient support for the user. Therefore, the design is more humanized, and sitting comfort is further improved.

The above description only summarizes the technical solutions of the present disclosure. Specific embodiments of the present disclosure are described hereinafter to better and clearer understand the technical solutions of the present disclosure, to practice the technical solutions based on the disclosure of the specification and to make the above and other objectives, features and advantages of the present disclosure more apparent and understandable.

### Brief Description Of The Drawings

By reading the detailed description of preferred embodiments hereinafter, various other advantages and beneficial effects become clear and apparent for persons of ordinary skill in the art. The accompanying drawings are merely for illustrating the preferred embodiments, but shall not be construed as limiting the present disclosure. In all the accompanying drawings, like reference numerals denote like parts. In the drawings:
FIG. 1 is a schematic structural view of a chair chassis according to an embodiment of the present disclosure;
FIG. 2 is a schematic view of an internal structure of the chair chassis according to an embodiment of the present disclosure;
FIG. 3 is a schematic partial enlarged view of part A in FIG. 2;
FIG. 4 is a schematic view of a side structure of disengagement between a locking slider and a memory stopper in the chair chassis according to an embodiment of the present disclosure;
FIG. 5 is a schematic view of a side structure of abutting and engagement between the memory stopper upon recline rotation about a rotation shaft and the locking slider in FIG. 4;
FIG. 6 is a schematic partial enlarged view of part B in FIG. 2.
FIG. 7 is a schematic structural view of a pitch block and the locking slider in the chair chassis according to an embodiment of the present disclosure;
FIG. 8 is a schematic view of a side structure of disengagement between the pitch block and the locking slider in the chair chassis according to an embodiment of the present disclosure;
FIG. 9 is a schematic view of a side structure of abutting and engagement between the pitch block in FIG. 8 upon pitch rotation along the rotation shaft and a restraining slider;
FIG. 10 is a schematic structural view of an elastic strip in the chair chassis according to an embodiment of the present disclosure;
FIG. 11 is a schematic structural view of a chair according to an embodiment of the present disclosure; and
FIG. 12 is a schematic structural view of a cushion support and a chair chassis in a chair according to an embodiment of the present disclosure.

### Reference numerals in the embodiments and denotations thereof:

100-Chair chassis, 110-base, 111-accommodation chamber, 120-backrest support, 121-connection arm, 130-memory stopper, 131-first arc surface, 140-locking slider, 141-second arc surface, 142-cover plate, 143-first rack, 150-first elastic member, 160-elastic slider, 161-second rack, 162-second inclined surface, 170-pitch block, 171-restraining surface, 180-restraining slider, 190-second elastic member, 200-active slider, 210-third elastic member, 220-fourth elastic member, 221-fifth elastic member, 230-first pull cord, 240-second pull cord, 250- first inclined surface, 300-elastic strip, 310-support structure, 500-rotation shaft, 1-chair, 10-cushion support, and 11-handle.

### Detailed Description

The embodiments containing the technical solutions of the present disclosure are described in detail with reference to the accompanying drawings. The embodiments hereinafter are only used to clearly describe the technical solutions of the present disclosure. Therefore, these embodiments are only used as examples, but are not intended to limit the protection scope of the present disclosure.

According to one aspect of the embodiments of the present disclosure, a chair chassis and a chair are provided, which achieve reclination memory adjustment of a backrest of the chair.

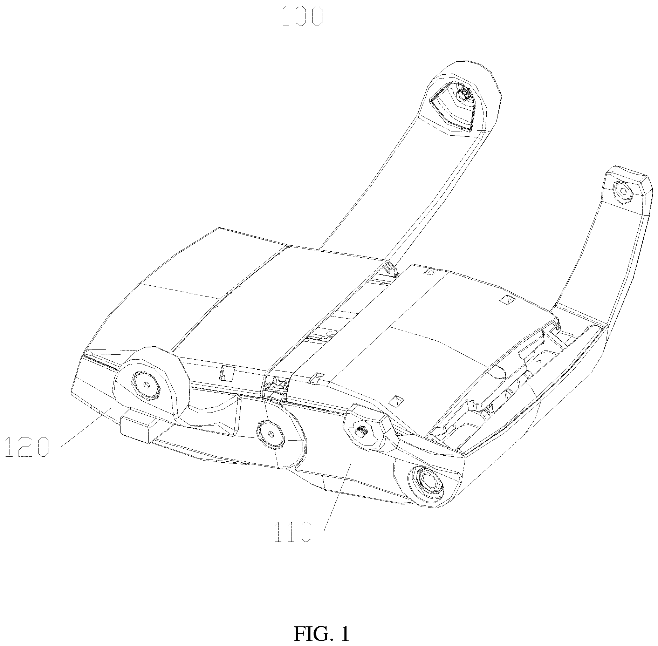

Referring to FIG. 1 to FIG. 5, a structure of a chair chassis and a structure of an internal adjustment mechanism thereof are illustrated, and side structures of engagement and disengagement between a memory stopper and a locking slider are illustrated.

As illustrated in the drawings, the chair chassis 100 includes: a base 110, a backrest support 120, a memory stopper 130, a locking slider 140, a first elastic member 150, and an elastic slider 160. The base 110 is internally provided with an accommodation chamber 111. One end of the backrest support 120 is connected to a backrest of a chair, and the other end of the backrest support 120 is rotatably connected to the base 110. The backrest support 120 may be automatically pitch restored by an elastic sheet or a torsion spring. The memory stopper 130 is disposed on the backrest support 120, and the memory stopper 130 is provided with a first arc surface 131 facing the base. The locking slider 140 is slidably disposed in the accommodation chamber 111 of the base 110, and the locking slider 140 is provided with a second arc surface 141 disposed opposite to the first arc surface 131. The second arc surface 141 is configured to support and limit recline rotation of the first arc surface 131, such that reclination of the backrest support 120 is limited. The first elastic member 150 is connected between the locking slider 140 and the base 110, and configured to supply a restoration elastic force for sliding towards the memory stopper 130 to the locking slider 140. The elastic slider 160 is slidably disposed in the accommodation chamber 111 of the base 110. One end of the elastic slider 160 is provided with a second rack 161. A side of the locking slider 140 is provided with a first rack 143. The second rack 161 on the elastic slider 160 is meshable with the first rack 143 on the locking slider 140, and configured to limit and lock the locking slider 140.

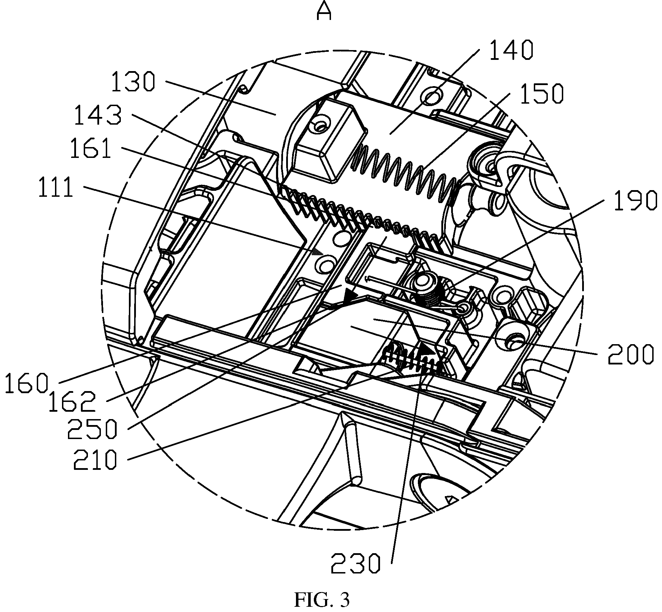

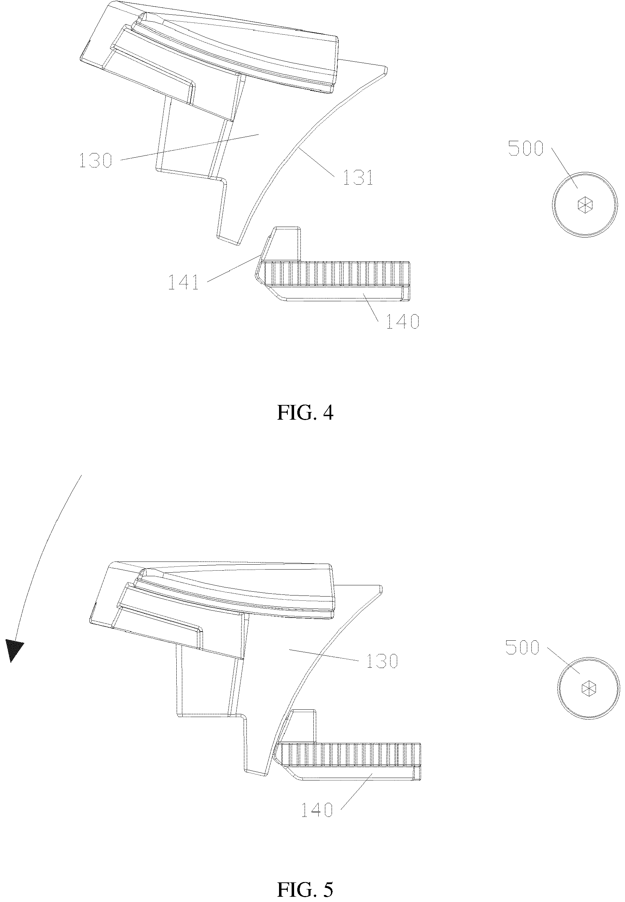

Still referring to FIG. 3 to FIG. 5, the backrest support 120 rotates relative to the base 110 about the rotation shaft 500 to adjust reclination and pitching of the backrest. In the case that the second rack 161 on the elastic slider 160 is meshed with the first rack 143 on the locking slider 140, the locking slider 140 is limited and locked, and in this case, the memory stopper 130 is capable of undergoing pitch rotation (for example, the state illustrated in FIG. 4). In the case that the memory stopper 130 undergoes recline rotation about the rotation shaft 500, reaches the first arc surface 131 and is abutted against the second arc surface 141 (for example, the state illustrated in FIG. 5), since the locking slider 140 is limited and locked, the memory stopper 130 fails to continue the recline rotation. In this way, the reclination memory limitation of the backrest support 120 is achieved. In addition, by meshing-based locking and disengagement-based unlocking between the second rack 161 on the elastic slider 160 and the first rack 143 on the locking slider 140, the locking slider 140 slides to any position and is then locked. In this way, an angle of the reclination memory limitation may be unlimitedly adjusted, and a user may adjust any reclination angle for memory and locking according to actual needs, thereby improving comfort of the user. During use, since the backrest support is elastically restorable, within the angle for memory limitation of the backrest support, the backrest of the chair may be automatically abutted against the back of a human body and rotates for adjustment accordingly with movement of the back of the human body, such that the backrest of the chair is tightly attached to the back of the human body and provides a sufficient support for the user. Therefore, the design is more humanized, and sitting comfort is further improved.

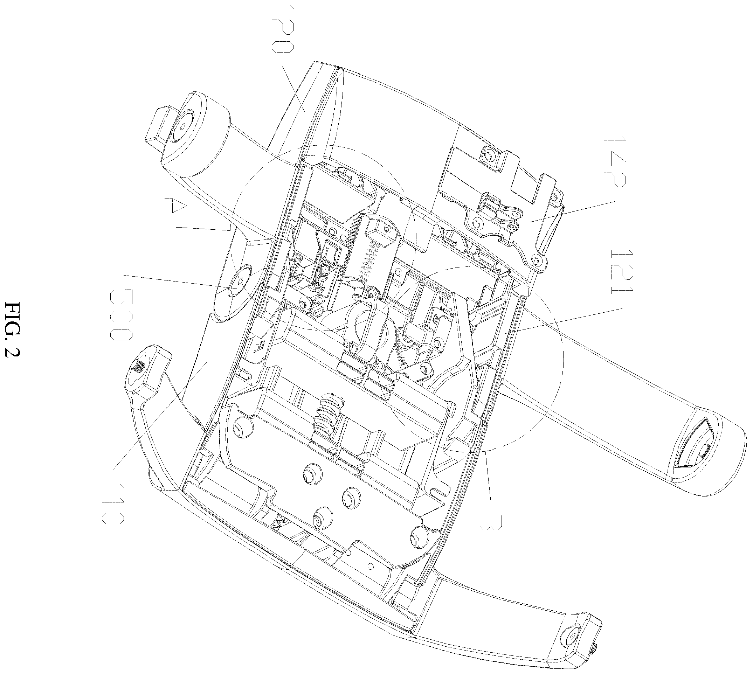

Still referring to FIG. 2 and FIG. 3, in specific embodiments, to limit a slide trajectory of the locking slider 140, a top of the locking slider 140 is covered with a cover plate 142. The cover plate 142 is fixedly connected to threads of the base 110.

Further, to improve usability of reclination limitation of the chair, the present disclosure further provides another embodiment. Specifically, still referring to FIG. 3, in some embodiments, the chair chassis may further include: a second elastic member 190, an active slider 200, and a third elastic member 210. The second elastic member 190 (for example, the torsion spring as illustrated in FIG. 3) is connected between the elastic slider 160 and the base, and configured to supply an elastic force for sliding away from the locking slider 140 to the elastic slider 160. The active slider 200 is slidably disposed in the accommodation chamber 111 of the base. A side of the active slider 200 is abuttable against one end of the elastic slider 160 to limit sliding of the elastic slider 160. The third elastic member 210 is connected between the active slider 200 and the base, and configured to supply an elastic force for sliding towards the elastic slider 160 to the active slider 200.

In the case that the active slider 200 overcomes the elastic force of the third elastic member 210 and slides (a slide direction is as indicated by the arrow marked on the active slider 200 in FIG. 3), the active slider 200 is not abutted against the elastic slider 160, such that the elastic slider 160 slides (a slide direction is as indicated by the arrow marked on the elastic slider 160 in FIG. 3) towards the active slider 200 under action of the second elastic member 190, such that the second rack 161 on the elastic slider 160 is separated from the first rack 143 on the locking slider 140. In this way, the locking slider 140 is unlocked, and the locking slider slides under action of the first elastic member 150.

Further, to improve operating efficiency between the active slider and the elastic slider, the present disclosure further provides another embodiment. Still referring to FIG. 3, in the embodiment, the active slider 200 is provided with a first inclined surface 250, and the elastic slider 160 is provided with a second inclined surface 162. In the case that the active slider 200 slides towards the elastic slider 160 under action of the third elastic member 210, the first inclined surface 250 of the active slider 200 and the second inclined surface 162 of the elastic slider 160 slide relative to each other, such that the elastic slider 160 slides towards the locking slider 140, and the second rack 161 on the elastic slider 160 is meshed with the first rack 143 on the locking slider 140. By configuring the first inclined surface 250 on the active slider 200 and the second inclined surface 162 on the elastic slider 160, in the case that the active slider 200 slides towards the elastic slider 160 under action of the third elastic member 210, the first inclined surface 250 and the second inclined surface 162 slide relative to each other, and the first inclined surface 250 of the active slider 200 supplies a pushing force to the second inclined surface 162 of the elastic slider 160, such that the elastic slider 160 is driven to slide towards the locking slider 140. Configuration of the inclined surfaces optimizes a transmission structure between the active slider 200 and the elastic slider 160, and improves a transmission efficiency.

Still referring to FIG. 3, in some embodiments, a first pull cord is connected to the active slider 200. In response to the first pull cord 230 being pulled, the active slider 200 slides (a slide direction is as indicated by the arrow marked on the active slider 200), such that the elastic slider 160 is separated from the locking slider 140.

By configuring the first pull cord 230, the user is capable of pulling the first pull cord 230 via the exterior of the chair or via a handle on the chair, and thus controlling limiting locking and unlocking of the locking slider 140. In this way, the reclination memory angle of the backrest of the chair is adjusted and locked.

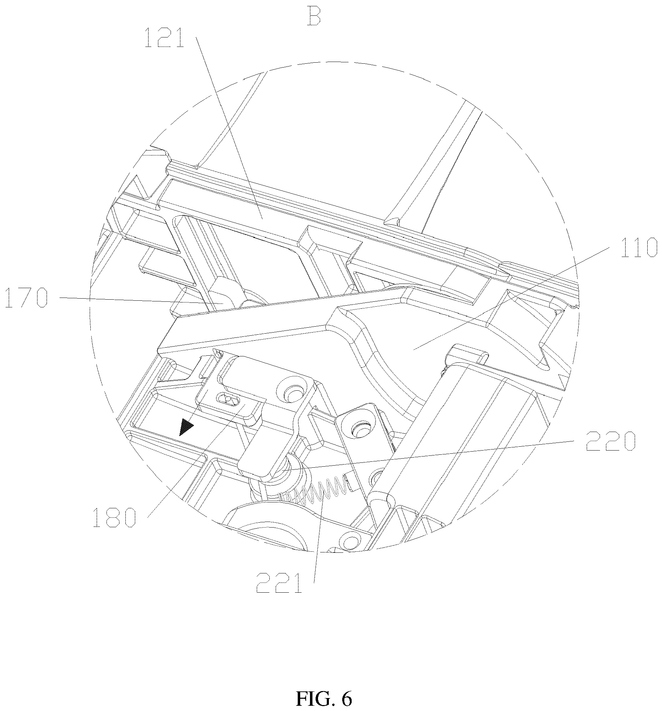

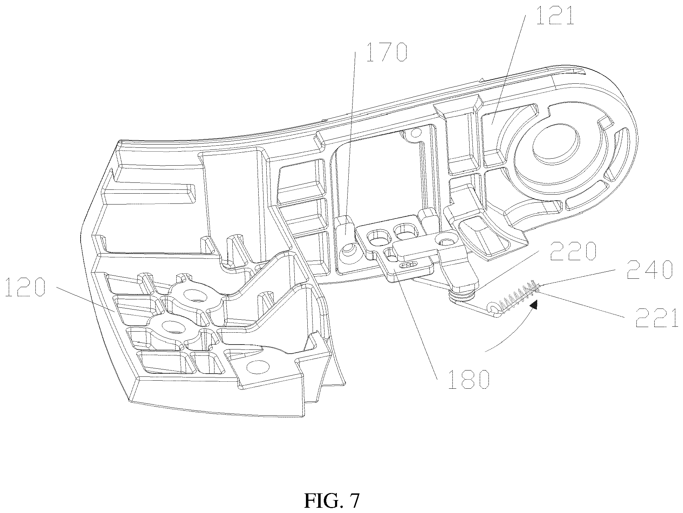

The chair chassis according to the embodiments of the present disclosure further includes a pitch block and a restraining slider, configured to limit pitch rotation of the backrest of the chair. Specifically, referring to FIG. 6 and FIG. 7, structures of the pitch block and the restraining block in the chair chassis according to the embodiments of the present disclosure are schematically illustrated. In some embodiments, two sides of the backrest support 120 may be each provided with a connection arm 121 rotatably connected to the base 110, and the chair chassis further includes a pitch block 170 and a restraining slider 180. The pitch block 170 is disposed on an inner side of the connection arm 121, the restraining slider 180 is slidably disposed in the accommodation chamber 111 of the base 110, and the restraining slider 180 is mateable with the pitch block 170, and configured to limit pitch rotation of the backrest support 120.

By cooperation between the pitch block 170 and the restraining slider 180, the backrest support 120 is limited in response to pitch rotation of the backrest support 120 to a fixed position, and thus the backrest support 120 is prevented from over-pitched and causing damages to the lumbar of the human body.

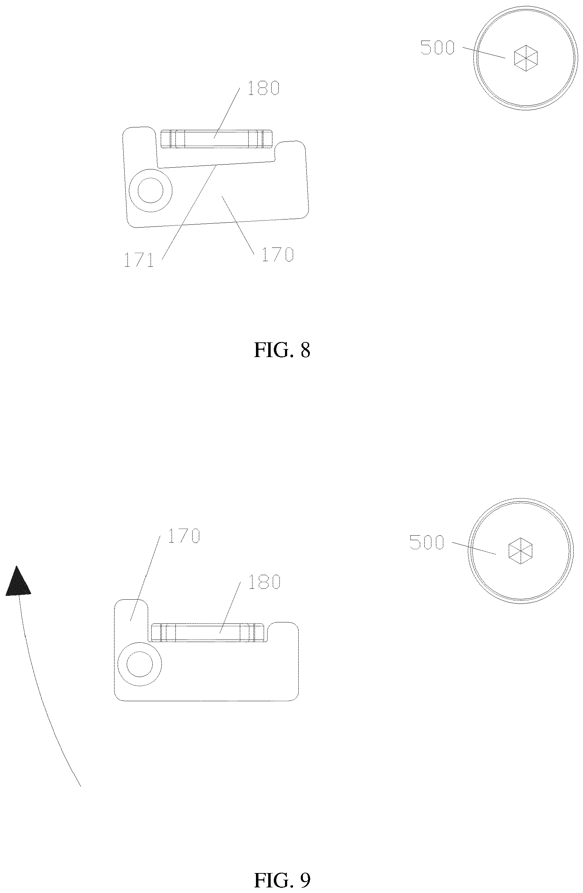

Referring to FIG. 8 and FIG. 9, side structures of engagement and disengagement between the restraining slider 180 and the pitch block 170 in the chair chassis according to an embodiment of the present disclosure are illustrated. In some embodiments, the pitch block 170 may be provided with a restraining surface 171 facing towards the restraining slider 180. The restraining surface 171 is configured to be abutted against the restraining slider 180 to limit pitch rotation of the backrest support 120.

Still referring to FIG. 8 and FIG. 9, in response to recline rotation of the backrest support, the restraining surface 171 of the pitch block 170 is separated from the restraining slider 180 (for example, the state as illustrated in FIG. 8). In this case, in response to pitch rotation of the backrest support about the rotation shaft 500, the restraining surface 171 of the pitch block 170 is abutted against the restraining block 180, the restraining block 180 limits continuous pitch rotation of the pitch block 170, such that the limiting locking of pitching of the backrest support is locked.

Still referring to FIG. 6 and FIG. 7, in some embodiments, the chair chassis may further include a fourth elastic member 220 (for example, a torsion spring as illustrated in FIG. 7) and a fifth elastic member 221 (for example, a spring as illustrated in FIG. 7). The fourth elastic member 220 is disposed on the base, and one end of the fourth elastic member 220 is rotatably connected to the restraining slider 180 to drive the restraining slider 180 to slide to disengage from the pitch block 170. The fifth elastic member 221 is connected between the other end of the fourth elastic member 220 and the base, and configured to supply an elastic force for sliding towards the elastic slider 170 to the restraining slider 180. Still referring to FIG. 8, in the case that the fourth elastic member 220 rotates (a rotation direction of the fourth elastic member 220 is as indicated by the arrow marked in FIG. 8) and drives the restraining block 180 to slide inwardly, the restraining slider 180 is separated from the pitch block 170, such that the pitch block 170 may continue pitch rotation thereof. In the case that the fourth elastic member 220 suffers from no external force, an elastic restoration force of the fifth elastic member 221 causes the fourth elastic member 220 to reversely rotate and drive the restraining block 180 to slide outwardly, such that the restraining slider 180 may be in limiting fit with the pitch block 170 again.

Still referring to FIG. 8, in some embodiments, a second pull cord 240 may be connected to the fourth elastic member 220. In response to the second pull cord 240 being pulled, the restraining block 180 slides, such that the restraining block 180 is separated from the pitch block 170.

By configuring the second pull cord 240, the user is capable of pulling the second pull cord 240 via the exterior of the chair or via a handle on the chair, and thus controlling engagement and disengagement between the restraining slider 180 and the pitch block 170. In this way, limitation and release of limitation of pitching of the backrest of the chair are achieved.

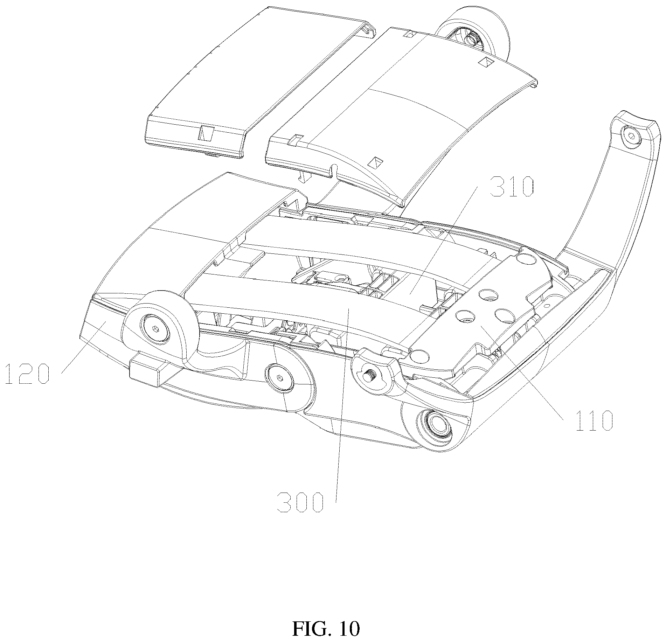

To ensure stability of an automatic pitch restoration structure of the backrest support, the present disclosure further provides an embodiment. Specifically, referring to FIG. 10, in some embodiments, the chair chassis may further include an elastic strip 300. One end of the elastic strip 300 is clamped onto the base 110, and the other end of the elastic strip 300 is clamped onto the backrest support 120. The base 110 is provided with a support structure 310 configured to support the elastic strip 300.

By configuring the elastic strip 300 and the support structure 310, in response to recline rotation of the backrest support 120, the elastic strip 300 is pressed such that the elastic strip 300 is subject to an elastic deformation. In the case that the backrest of the chair does not suffer an external force, the elastic strip 300 restores from the deformation to drive the backrest support 120 to undergo pitch rotation restoration.

A person skilled in the art shall understand that the illustrations in the drawings are merely examples, and in other embodiments, automatic pitch restoration of the backrest support may also be achieved by configuring a torsion spring on the rotation shaft to which the backrest support and the base are connected.

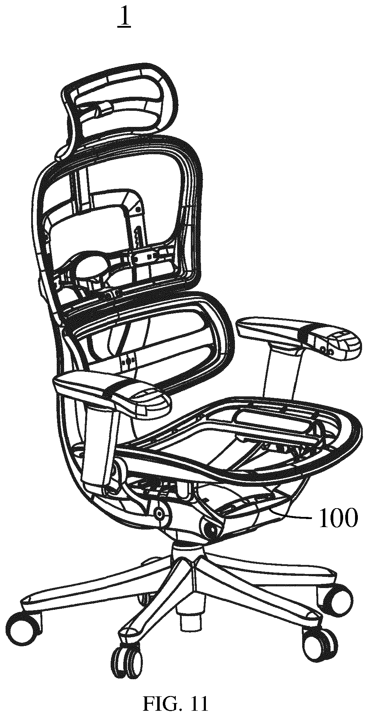

As illustrated in FIG. 11, according to another aspect of the embodiments of the present disclosure, a chair 1 is provided. The chair 1 includes the chair chassis 100 as described in the above embodiments.

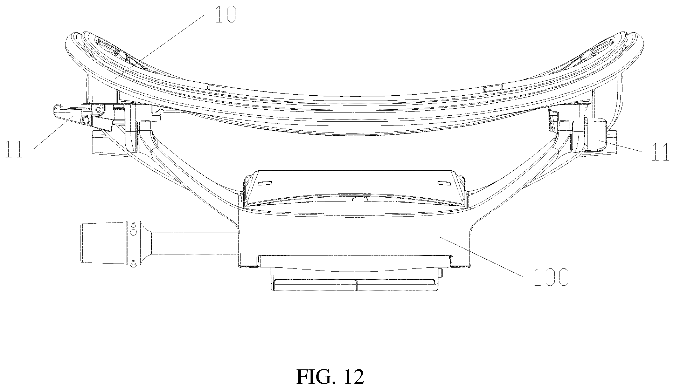

Referring to FIG. 12, a schematic structure of a cushion support in a chair according to an embodiment of the present disclosure is illustrated.

As illustrated in FIG. 12, the chair may further include a cushion support 10. The cushion support 10 is disposed on the chair chassis 100, and the cushion support 10 is provided with a handle 11. The handle 11 is configured to control and adjust the chair chassis 100.

Still referring to FIG. 12, in the specific embodiment as illustrated in FIG. 12, two sides of the cushion support 10 are each provided with the handle 11. The handle 11 may be configured to pull the active slider and the restraining slider using a pull cord, such that locking and unlocking of the reclination memory of the backrest of the chair, and locking and unlocking of pitching of the backrest of the chair are achieved. In this way, the user is capable of conveniently adjusting reclination memory limitation of the backrest of the chair.

It should be noted that unless otherwise specified, the technical terms and scientific terms used in the present disclosure shall express general meanings that may be understood by a person skilled in the art.

In the description of the embodiments of the present disclosure, it should be understood that the terms "central," "transversal," "longitudinal," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations and position relationships which are based on the illustrations in the accompanying drawings, and these terms are merely for ease and brevity of the description, instead of indicating or implying that the devices or elements shall have a particular orientation and shall be structured and operated based on the particular orientation. Accordingly, these terms shall not be construed as limiting the present disclosure.

In addition, terms of "first," "second," and the like are only used for description, but shall not be understood as indication or implication of relative importance or implicit indication of the number of the specific technical features. In the description of the embodiments of the present disclosure, the term "more" or "a plurality of" signifies at least two, unless otherwise specified.

In the description of the embodiments of the present disclosure, it should be noted that unless otherwise specified and defined, the terms "mounted," "coupled," "connected," "fixed," and derivative forms thereof shall be understood in a broad sense, which, for example, may be understood as fixed connection, detachable connection or integral connection; may be understood as mechanical connection or electrical connection, or understood as direct connection, indirect connection via an intermediate medium, or communication between the interiors of two elements or interactions between two elements. Persons of ordinary skill in the art may understand the specific meanings of the above terms in the embodiments of the present disclosure according to the actual circumstances and contexts.

In the description of the embodiments of the present disclosure, unless otherwise specified or defined, by defining that a first feature is arranged "above," or "below," or "beneath" a second feature, it means that the first feature is in direct contact with the second feature, or the first feature is in indirect contact with the second feature via an intermediate medium. In addition, by defining that a first feature is arranged "over," "above," and "under" a second feature, it means that the first feature is rightly over the second feature or is obliquely above the second feature, or the horizontal height of the first feature is greater than that of the second feature. In addition, by defining that a first feature is arranged "under," or "below," or "beneath" a second feature, it means that the first feature is rightly under the second feature or is obliquely below the second feature, or the horizontal height of the first feature is less than that of the second feature.

It should be finally noted that the above-described embodiments are merely for illustration of the present disclosure, but are not intended to limit the present disclosure. Although the present disclosure is described in detail with reference to these embodiments, a person skilled in the art may also make various modifications to the technical solutions disclosed in the embodiments, or make equivalent replacements to a part of or all technical features contained therein. Such modifications or replacement, made without departing from the principles of the present disclosure, shall fall within the scope defined by the claims. The present disclosure is not limited to the specific embodiments described herein in this specification, but also includes all the technical solutions falling within the scope subject to the appended claims.

## Claims

1. A chair chassis (100), configured to adjust a backrest of a chair, the chair chassis (100) comprising:
a base (110), provided with an accommodation chamber (111);
a backrest support (120), wherein one end of the backrest support (120) is configured to be connected to the backrest of the chair, and the other end of the backrest support (120) is rotatably connected to the base (110), and the backrest support (120) is elastically restorable;
a memory stopper (130), disposed on the backrest support (120), wherein the memory stopper (130) is provided with a first arc surface (131) facing the base (110);
a locking slider (140), slidably disposed in the accommodation chamber (111) of the base (110), wherein the locking slider (140) is provided with a second arc surface (141) disposed opposite to the first arc surface (131), wherein the second arc surface (141) is configured to support and limit recline rotation of the first arc surface (131) such that reclination of the backrest support (120) is limited, and a side of the locking slider (140) is provided with a first rack (143);
a first elastic member (150), connected between the locking slider (140) and the base (110), and configured to supply a restoration elastic force for sliding towards the memory stopper (130) to the locking slider (140); and
an elastic slider (160), slidably disposed in the accommodation chamber (111) of the base (110), **characterized in that** one end of the elastic slider (160) is provided with a second rack (161), wherein the second rack (161) is meshable with the first rack (143), and configured to limit and lock the locking slider (140).

2. The chair chassis according to claim 1, further comprising:
a second elastic member (190), connected between the elastic slider (160) and the base (110), and configured to supply an elastic force for sliding away from the locking slider (140) to the elastic slider (160);
an active slider (200), slidably disposed in the accommodation chamber (111) of the base (110), wherein a side of the active slider (200) is abuttable against one end of the elastic slider (160) to limit sliding of the elastic slider (160); and
a third elastic member (210), connected between the active slider (200) and the base (110), and configured to supply an elastic force for sliding towards the elastic slider (160) to the active slider (200).

3. The chair chassis according to claim 2, wherein the active slider (200) is provided with a first inclined surface (250), and the elastic slider (160) is provided with a second inclined surface (162), wherein in the case that the active slider (200) slides towards the elastic slider (160) under action of the third elastic member (210), the first inclined surface (250) and the second inclined surface (162) slide relative to each other such that the elastic slider (160) slides towards the locking slider (140) and the second rack (161) is meshed with the first rack (143).

4. The chair chassis according to claim 3, wherein a first pull cord (230) is connected to the active slider (200), wherein in the case that the first pull cord (230) is pulled, the active slider (200) slides such that the elastic slider (160) is separated from the locking slider (140).

5. The chair chassis according to claim 1, wherein two sides of the backrest support (120) are each provided with a connection arm (121) rotatably connected to the base (110), and the chair chassis (100) further comprises:
a pitch block (170), disposed on an inner side of the connection arm (121);
a restraining slider (180), slidably disposed in the accommodation chamber (111) of the base (110), wherein the restraining slider (180) is mated with the pitch block (170), and configured to limit pitch rotation of the backrest support (120).

6. The chair chassis according to claim 5, wherein the pitch block (170) is provided with a restraining surface (171), wherein the restraining surface (171) is configured to be abutted against the restraining slider (180) to limit pitch rotation of the backrest support (120).

7. The chair chassis according to claim 5, further comprising:
a fourth elastic member (220), disposed on the base (110), wherein one end of the fourth elastic member (220) is connected to the restraining slider (180), and configured to drive the restraining slider (180) to slide to be separated from the pitch block (170); and
a fifth elastic member (221), connected between the other end of the fourth elastic member (220) and the base (110), and configured to supply an elastic force for sliding towards the pitch block (170) to the restraining slider (180).

8. The chair chassis according to claim 7, wherein a second pull cord (240) is connected to the fourth elastic member (220), wherein in the case that the second pull cord (240) is pulled, the restraining slider (180) slides such that the restraining slider (180) is separated from the pitch block (170).

9. The chair chassis according to claim 1, wherein a top of the locking slider (140) is covered with a cover plate (142), wherein the cover plate (142) is fixedly connected to threads of the base (110).

10. The chair chassis according to claim 1, wherein the chair chassis further comprises an elastic strip (300), wherein one end of the elastic strip (300) is clamped onto the base (110), and the other end of the elastic strip (300) is clamped onto the backrest support (120), wherein the base (110) is provided with a support structure (310) configured to support the elastic strip (300).

11. The chair chassis according to claim 1, wherein the backrest support (120) rotates relative to the base (110) about the rotation shaft (500) to adjust reclination and pitching of the backrest.

12. A chair, comprising the chair chassis (100) as defined in any one of claims 1 to 11.

13. The chair according to claim 12, further comprising a cushion support (10), wherein the cushion support (10) is disposed on the chair chassis (100), and the cushion support (10) is provided with a handle (11), wherein the handle (11) is configured to control and adjust the chair chassis (100).

## Patentansprüche

1. Stuhlgestell (100), das dazu konfiguriert ist, eine Rückenlehne eines Stuhls anzupassen, das Stuhlgestell (100) umfassend:
Eine Basis (110), die mit einer Aufnahmekammer (111) versehen ist;
Eine Rückenlehnenstütze (120), wobei ein Ende der Rückenlehnenstütze (120) so konfiguriert ist, dass es mit der Rückenlehne des Stuhls verbunden ist, und das andere Ende der Rückenlehnenstütze (120) drehbar mit der Basis (110) verbunden ist, und die Rückenlehnenstütze (120) elastisch rückstellbar ist;
Einen Memory-Stopper (130), der an der Rückenlehnenstütze (120) angeordnet ist, wobei der Memory-Stopper (130) mit einer ersten bogenförmigen Oberfläche (131) bereitgestellt ist, die der Basis (110) zugewandt ist;
einen Verriegelungsschieber (140), der verschiebbar in der Aufnahmekammer (111) der Basis (110) angeordnet ist, wobei der Verriegelungsschieber (140) mit einer zweiten bogenförmigen Oberfläche (141) bereitgestellt ist, die gegenüberliegend zu der ersten bogenförmigen Oberfläche (131) angeordnet ist, wobei die zweite bogenförmige Oberfläche (141) so konfiguriert ist, dass sie die Drehung der ersten bogenförmigen Oberfläche (131) zur Neigung unterstützt und begrenzt, sodass die Neigung der Rückenlehnenstütze (120) begrenzt ist, und eine Seite des Verriegelungsschiebers (140) mit einem ersten Rack (143) bereitgestellt ist;
Ein erstes elastisches Element (150), das zwischen dem Verriegelungsschieber (140) und der Basis (110) verbunden und dazu konfiguriert ist, eine elastische Rückstellkraft zum Gleiten in Richtung des Memory-Stoppers (130) an den Verriegelungsschieber (140) zu liefern; und
Einen elastischen Schieber (160), der verschiebbar in der Aufnahmekammer (111) der Basis (110) angeordnet ist, **dadurch gekennzeichnet, dass** ein Ende des elastischen Schiebers (160) mit einem zweiten Rack (161) bereitgestellt ist, wobei das zweite Rack (161) mit dem ersten Rack (143) in Eingriff gebracht werden kann und konfiguriert ist, den Verriegelungsschieber (140) zu begrenzen und zu verriegeln.

2. Stuhlgestell nach Anspruch 1, ferner umfassend:
Ein zweites elastisches Element (190), das zwischen dem elastischen Schieber (160) und der Basis (110) verbunden und konfiguriert ist, eine elastische Kraft zum Wegschieben von dem Verriegelungsschieber (140) zu dem elastischen Schieber (160) zu liefern;
Einen aktiven Schieber (200), der verschiebbar in der Aufnahmekammer (111) der Basis (110) angeordnet ist, wobei eine Seite des aktiven Schiebers (200) an einem Ende des elastischen Schiebers (160) anlegbar ist, um das Verschieben des elastischen Schiebers (160) zu begrenzen; und
Ein drittes elastisches Element (210), das zwischen dem aktiven Schieber (200) und der Basis (110) verbunden und konfiguriert ist, dem aktiven Schieber (200) eine elastische Kraft zum Verschieben in Richtung des elastischen Schiebers (160) zuzuführen.

3. Stuhlgestell nach Anspruch 2, wobei der aktive Schieber (200) mit einer ersten geneigten Oberfläche (250) bereitgestellt ist und der elastische Schieber (160) mit einer zweiten geneigten Oberfläche (162) bereitgestellt ist, wobei in dem Fall, dass der aktive Schieber (200) unter Einwirkung des dritten elastischen Elements (210) zu dem elastischen Schieber (160) hin gleitet die erste schräge Oberfläche (250) und die zweite schräge Oberfläche (162) relativ zueinander gleiten, sodass der elastische Schieber (160) in Richtung des Verriegelungsschiebers (140) gleitet und das zweite Rack (161) mit dem ersten Rack (143) in Eingriff steht.

4. Stuhlgestell nach Anspruch 3, wobei eine erste Zugschnur (230) mit dem aktiven Schieber (200) verbunden ist, wobei in dem Fall, dass die erste Zugschnur (230) gezogen wird, der aktive Schieber (200) so gleitet, dass der elastische Schieber (160) von dem Verriegelungsschieber (140) getrennt wird.

5. Stuhlgestell nach Anspruch 1, wobei zwei Seiten der Rückenlehnenstütze (120) jeweils mit einem Verbindungsarm (121) bereitgestellt sind, der drehbar mit der Basis (110) verbunden ist, und wobei das Stuhlgestell (100) ferner umfasst:
Einen Neigungsblock (170), der an einer Innenseite des Verbindungsarms (121) angeordnet ist;
Einen Rückhalteschieber (180), der verschiebbar in der Aufnahmekammer (111) der Basis (110) angeordnet ist, wobei der Rückhalteschieber (180) mit dem Neigungsblock (170) zusammenpasst und konfiguriert ist, um die Neigungsdrehung der Rückenlehnenstütze (120) zu begrenzen.

6. Stuhlgestell nach Anspruch 5, wobei der Neigungsblock (170) mit einer Rückhaltefläche (171) bereitgestellt ist, wobei die Rückhaltefläche (171) so konfiguriert ist, dass sie an dem Rückhalteschieber (180) anliegt, um die Neigungsdrehung der Rückenlehnenstütze (120) zu begrenzen.

7. Stuhlgestell nach Anspruch 5, ferner umfassend:
Ein viertes elastisches Element (220), das auf der Basis (110) angeordnet ist, wobei ein Ende des vierten elastischen Elements (220) mit dem Rückhalteschieber (180) verbunden und so konfiguriert ist, dass es den Rückhalteschieber (180) so antreibt, dass er von dem Neigungsblock (170) getrennt wird; und
Ein fünftes elastisches Element (221), das zwischen dem anderen Ende des vierten elastischen Elements (220) und der Basis (110) verbunden ist und konfiguriert ist, eine elastische Kraft zum Verschieben in Richtung des Neigungsblocks (170) an den Rückhalteschieber (180) zu liefern.

8. Stuhlgestell nach Anspruch 7, wobei eine zweite Zugschnur (240) mit dem vierten elastischen Element (220) verbunden ist, wobei in dem Fall, dass die zweite Zugschnur (240) gezogen wird, der Rückhalteschieber (180) so gleitet, dass der Rückhalteschieber (180) von dem Neigungsblock (170) getrennt wird.

9. Stuhlgestell nach Anspruch 1, wobei eine Oberseite des Verriegelungsschiebers (140) mit einer Abdeckplatte (142) bedeckt ist, wobei die Abdeckplatte (142) fest mit Gewinden der Basis (110) verbunden ist.

10. Stuhlgestell nach Anspruch 1, wobei das Stuhlgestell ferner einen elastischen Streifen (300) umfasst, wobei ein Ende des elastischen Streifens (300) an der Basis (110) festgeklemmt ist und das andere Ende des elastischen Streifens (300) an der Rückenlehnenstütze (120) festgeklemmt ist, wobei die Basis (110) mit einer Trägerstruktur (310) bereitgestellt ist, die so konfiguriert ist, dass sie den elastischen Streifen (300) trägt.

11. Stuhlgestell nach Anspruch 1, wobei sich die Rückenlehnenstütze (120) relativ zu der Basis (110) um die Drehachse (500) dreht, um die Neigung und das Anpassen der Rückenlehne einzustellen.

12. Stuhl, umfassend das Stuhlgestell (100), wie in einem der Ansprüche 1 bis 11 definiert.

13. Stuhl nach Anspruch 12, ferner umfassend eine Polsterauflage (10), wobei die Polsterauflage (10) auf dem Stuhlgestell (100) angeordnet ist und die Polsterauflage (10) mit einem Handgriff (11) versehen ist, wobei der Handgriff (11) zum Steuern und Anpassen des Stuhlgestells (100) konfiguriert ist.

## Revendications

1. Châssis de chaise (100), configuré pour régler un dossier d'une chaise, le châssis de chaise (100) comprenant :
une base (110), dotée d'une chambre de réception (111) ;
un support de dossier (120), une extrémité du support de dossier (120) étant configurée pour être raccordée au dossier de la chaise, et l'autre extrémité du support de dossier (120) étant raccordée en rotation à la base (110), et le support de dossier (120) est élastiquement restaurable ;
une butée de mémoire (130), disposée sur le support de dossier (120), dans lequel la butée de mémoire (130) est dotée d'une première surface arquée (131) faisant face à la base (110) ;
une coulisse de verrouillage (140), disposée de manière coulissante dans la chambre de réception (111) de la base (110), dans lequel la coulisse de verrouillage (140) est dotée d'une seconde surface arquée (141) disposée opposée à la première surface arquée (131), dans lequel la seconde surface arquée (141) est configurée pour supporter et limiter une rotation d'inclinaison vers l'arrière de la première surface arquée (131) de sorte qu'une inclinaison vers l'arrière du support de dossier (120) est limitée, et un côté de la coulisse de verrouillage (140) est doté d'une première crémaillère (143) ;
un premier élément élastique (150), raccordé entre la coulisse de verrouillage (140) et la base (110), et configuré pour appliquer une force élastique de restauration pour un coulissement en direction de la butée de mémoire (130) vers la coulisse de verrouillage (140) ; et
une coulisse élastique (160), disposée de manière coulissante dans la chambre de réception (111) de la base (110), **caractérisée en ce qu'**une extrémité de la coulisse élastique (160) est dotée d'une seconde crémaillère (161), dans lequel la seconde crémaillère (161) peut être engrenée avec la première crémaillère (143), et configurée pour limiter et verrouiller la coulisse de verrouillage (140).

2. Châssis de chaise selon la revendication 1, comprenant en outre :
un deuxième élément élastique (190), raccordé entre la coulisse élastique (160) et la base (110), et configuré pour appliquer une force élastique pour un coulissement à l'opposé de la coulisse de verrouillage (140) vers la coulisse élastique (160) ;
une coulisse active (200), disposée de manière coulissante dans la chambre de réception (111) de la base (110), dans lequel un côté de la coulisse active (200) peut venir en butée contre une extrémité de la coulisse élastique (160) pour limiter un coulissement de la coulisse élastique (160) ; et
un troisième élément élastique (210), raccordé entre la coulisse active (200) et la base (110), et configuré pour fournir une force élastique pour un coulissement en direction de la coulisse élastique (160) vers la coulisse active (200).

3. Châssis de chaise selon la revendication 2, dans lequel la coulisse active (200) est dotée d'une première surface inclinée (250), et la coulisse élastique (160) est dotée d'une seconde surface inclinée (162), dans lequel dans le cas où la coulisse active (200) coulisse en direction de la coulisse élastique (160) sous l'action du troisième élément élastique (210), la première surface inclinée (250) et la seconde surface inclinée (162) coulissent l'une par rapport à l'autre de sorte que la coulisse élastique (160) coulisse en direction de la coulisse de verrouillage (140) et la seconde crémaillère (161) est engrenée avec la première crémaillère (143).

4. Châssis de chaise selon la revendication 3, dans lequel un premier cordon de traction (230) est raccordé à la coulisse active (200), dans lequel dans le cas où le premier cordon de traction (230) est tiré, la coulisse active (200) coulisse de sorte que la coulisse élastique (160) est séparée de la coulisse de verrouillage (140).

5. Châssis de chaise selon la revendication 1, dans lequel deux côtés du support de dossier (120) sont chacun dotés d'un bras de raccordement (121) raccordé en rotation à la base (110), et le châssis de chaise (100) comprend en outre :
un bloc de pas (170), disposé sur un côté interne du bras de raccordement (121) ;
une coulisse de retenue (180), disposée de manière coulissante dans la chambre de réception (111) de la base (110), dans lequel la coulisse de retenue (180) est accouplée au bloc de pas (170), et configurée pour limiter une rotation de pas du support de dossier (120).

6. Châssis de chaise selon la revendication 5, dans lequel le bloc de pas (170) est doté d'une surface de retenue (171), dans lequel la surface de retenue (171) est configurée pour être mise en butée contre la coulisse de retenue (180) pour limiter une rotation de pas du support de dossier (120).

7. Châssis de chaise selon la revendication 5, comprenant en outre :
un quatrième élément élastique (220), disposé sur la base (110), dans lequel une extrémité du quatrième élément élastique (220) est raccordée à la coulisse de retenue (180), et configurée pour entraîner la coulisse de retenue (180) à coulisser pour être séparée du bloc de pas (170) ; et
un cinquième élément élastique (221), raccordé entre l'autre extrémité du quatrième élément élastique (220) et la base (110), et configuré pour fournir une force élastique pour coulisser en direction du bloc de pas (170) vers la coulisse de retenue (180).

8. Châssis de chaise selon la revendication 7, dans lequel un second cordon de traction (240) est raccordé au quatrième élément élastique (220), dans lequel dans le cas où le second cordon de traction (240) est tiré, la coulisse de retenue (180) coulisse de sorte que la coulisse de retenue (180) est séparée du bloc de pas (170).

9. Châssis de chaise selon la revendication 1, dans lequel une partie supérieure de la coulisse de verrouillage (140) est couverte d'une plaque de couverture (142), dans lequel la plaque de couverture (142) est fixement raccordée à des filetages de la base (110).

10. Châssis de chaise selon la revendication 1, dans lequel le châssis de chaise comprend en outre une bande élastique (300), dans lequel une extrémité de la bande élastique (300) est serrée sur la base (110), et l'autre extrémité de la bande élastique (300) est serrée sur le support de dossier (120), dans lequel la base (110) est dotée d'une structure de support (310) configurée pour supporter la bande élastique (300).

11. Châssis de chaise selon la revendication 1, dans lequel le support de dossier (120) tourne par rapport à la base (110) autour de l'arbre de rotation (500) pour régler une inclinaison vers l'arrière et un pas du dossier.

12. Chaise, comprenant le châssis de chaise (100) tel que défini dans l'une quelconque des revendications 1 à 11.

13. Chaise selon la revendication 12, comprenant en outre un support de coussin (10), dans laquelle le support de coussin (10) est disposé sur le châssis de chaise (100), et le support de coussin (10) est doté d'une poignée (11), dans lequel la poignée (11) est configurée pour commander et régler le châssis de chaise (100).
